# EUROPEAN PATENT SPECIFICATION

(11) **EP 3 744 163 B1**
(45) Date of publication and mention of the grant of the patent: **30.03.2022**
(21) Application number: 20177513.7
(22) Date of filing: 29.05.2020
(51) Int. Cl.: A01C 23/00

(54) **FERTILIZER DEVICE WITH DISTRIBUTION DEVICE AND PLATE FOR FLUID SUBSTANCES, METHOD FOR ADJUSTING THE OUTPUT**
DÜNGEEINRICHTUNG MIT VERTEILEINRICHTUNG UND -PLATTE FÜR FLÜSSIGE SUBSTANZEN, VERFAHREN ZUM EINSTELLEN DES DURCHSATZES
DISPOSITIF DE FUMAGE AVEC DISPOSITIF ET PLATE DE DISTRIBUTION POUR LISIER, PROCÉDÉ D'AJUSTAGE DE DÉBIT

(30) Priority: 29.05.2019 NL 2023238
(43) Date of publication of application: 02.12.2020
(73) Proprietor: Alrena B.V., 7665 SH Albergen (NL)
(72) Inventor: SCHURINK, Gerard, Johannes, 7665 SH Albergen (NL); HOEK, Johannes, Bernardus, Maria, 7665 SH Albergen (NL)
(74) Representative: Patentwerk B.V.

(56) References cited:
- EP-A1- 0 772 965
- DE-U1- 20 308 082
- DE-U1-202018 003 796

## Description

The invention concerns a distribution plate for use in a distribution device for fluid substances, such as for example fertilizer, and to a distribution device for fluid substances provided with at least one such distribution plate. The invention also relates to a fertilizer device for spreading fluid substances over the ground, which comprises at least one such distribution device. Finally, the invention also relates to a method for controlling the output of a distribution device for fluid substances.

In soil fertilizing, fertilizer devices (fertilizers) are used which are designed for the even distribution of fluid fertilizer over the ground. For this, the fertilizer devices are equipped with one or more (usually two) spreader arms carrying several pipes, by means of which the fluid fertilizer is conducted to the various distribution openings in order to reach the ground from there. For distribution of the fluid fertilizer over the several pipes, distributors are used which are often placed on the spreader arms in order to limit the total pipe length. The existing distributors are provided with a fertilizer inlet that is connected to a fertilizer reservoir (for example a manure tanker), and with several fertilizer outlets to which the several pipes are connected. These distributors are also equipped with one or more rotating blades and a perforated disc arranged on the inside of the distributor against the fertilizer outlets, which perforated disc is positioned relative to the fertilizer outlets such that the holes in the perforated disc coincide with the fertilizer outlets. When the blades slide along the perforated disc serving as a counter-blade, solid components present in the fluid fertilizer are chopped up and some of the fertilizer outlets are closed by the blades, whereby the fertilizer pressure on the remaining fertilizer outlets is increased, supporting the outflow of fertilizer. The existing distributors are often also equipped with an air feed system which must ensure that the fertilizer outlets are provided with air at the moment they are closed by the rotating blades. The air feed thus (partly) eliminates the vacuum that can occur in the pipes when the fertilizer outlets are closed without air feed. The presence of air feed therefore leads to a more constant output of fluid fertilizer.

In order to obtain an optimal distribution of the fluid fertilizer over the ground, it is desirable to distribute the fluid fertilizer via a large number of pipes (of the order of several tens). A distributor must therefore be provided with a large number of fertilizer outlets. Also, the distributor must offer sufficient space for a fertilizer inlet and a motor connected to the blades. In addition, for the purpose of air feed, an air inlet must be connected to the distributor. Finally, the distributors must be compact in order to take up little space on the spreader arms and must not be too heavy. The spreader arms may be folded up, for example along a fertilizer truck or behind a tractor, in order to allow transport by road. The spreader arms, together with the vehicle, must then have a width which remains below the legally permitted transport width. For these reasons, the distributors should have modest dimensions. To ensure a sufficiently compact distributor, in generally known distributors this is achieved at the cost of the number of fertilizer outlets or the diameter of the fertilizer inlet, which leads to a distributor with an insufficient number of fertilizer outlets and/or a reduced capacity.

Such a distribution device is described for example in European patent application EP 3 175 696. One disadvantage of the existing distribution devices is that the capacity (output) thereof cannot be adjusted; the capacity of the existing distribution devices is therefore not adjustable, or only very roughly adjustable identically over all outlet openings.

The German Gebrauchsmuster DE 20 2018 003796 discloses a device for the distribution of liquids containing solids. A distributor connected to a liquid manure tank has a knife that is rotatable in a housing and cooperates with a disc provided with holes. The disc is composed of two parts; a first disc and a counter disc, both provided with holes and movable relative to each other such that the feedthrough of the cooperating openings may be changed.

The German Gebrauchsmuster DE 203 08 082 discloses a device for the distribution of fluids with varying viscosities wherein a rotatable shredding knife cooperates with a stationary disc provided with multiple holes. The multiple hole stationary disc is provided with a second disc which is identical with respect to the holes provided and which is displaceable with respect to the fixed disc, between a position in which the mating holes of the discs leave the openings fully open and a position with fully closed openings.

The object of the invention is to achieve an improved distribution plate, distribution device and fertilizer device with which the distribution capacity can be adapted more precisely and more controllably than in the distribution devices according to the prior art.

For this, the invention provides a distribution plate for use in a distribution device for fluid substances, such as for example fertilizer, according to claim 1. By changing the size of the passage openings in the plate, the supply (flow) through the openings can be adjusted. The fluid substance (fertilizer) to be distributed often contains solid parts, so there is a high chance of clogging of one or more openings; in particular if these openings have an adjustable size, the structure which allows such adjustable size can vary easily lead to an increased chance of clogging. Because, in the present invention, the flat supply side of the distribution plate is defined by at least two plate parts, the chance of clogging is however limited to the chance of clogging which is present in distribution plates according to the prior art distribution plates. Because the plate parts engage in each other such that together they define the supply side, the plate parts come into contact with the cutter blade moving along this side. Each plate part coming into contact with the cutter blade may therefore be cleaned by the blade and freed from contamination.

If the top sides of the passage opening in the distribution plate are formed by at least two plate parts movable relative to each other, by changing the mutual positioning of these top sides, the spacing of the sides can be changed, whereby the size of a passage opening changes. The advantage of this is that, depending on the properties of the fluid substance to be distributed, the optimum size of the passage openings can be set by the relative movement of the plate parts. In the prior art, changing the size of the openings in the distribution plate means removing a distributor and replacing the distribution plate therein by another distribution plate in which the openings provided have a different size from the size of the passage openings in the original distribution plate. Thus the present invention makes it possible, in a relatively simple fashion, to vary the size of the openings in a distribution plate of a distributor in a continuous fashion. In this way, the configuration of the distribution plate can easily be adapted (optimised) continuously according to circumstances. This leads to an improved function of the distributor and requires less work (fitting and removal of distribution plates for adjustment are superfluous).

The relative movability of the plate parts may be achieved in various ways, for example by rotating and/or translating the plate parts relative to each other.

Furthermore, it is advantageous if the passage openings are self-clearing towards the flat supply side. Any (coarse) contaminating parts which could lead to clogging of the passage opening can easily be removed from such a passage opening again by this design, or can even pass spontaneously out of the passage opening. A passage opening shaped to be self-clearing can be achieved by tapering the passage openings, wherein the narrower sides of the passage openings lie on the supply side of the distribution plate. The tapering passage openings also ensure that the edges do not lie skewed on the supply side on which the at least one cutting blade moves, which leads to an improved cutting effect.

For a good cutting effect of the cutting blade along the distribution plate, it is advantageous if at least some of the sides of the passage openings are provided with a sharp edge, for example an edge with an angle of 80 - 100°.

In a practical design, the distribution plate is substantially circular and/or the passage openings are arranged substantially coaxially in the distribution plate. Such a form of distribution plate fits well with the existing fertilizer distributors, in which a distribution plate according to the present invention can advantageously be installed without very extensive changes having to be made to the other parts of a distributor.

In yet another design variant of the distribution plate, the passage openings have mutually different sizes. Due to the relative movement of the plate parts specifically designed for this, the size differences between the passage openings can be changed. Thus depending on circumstances, the distribution of the fluid substance to be distributed can also be varied via the various passage openings in a distribution plate with passage openings of different sizes.

In yet another design variant, at least some of the passage openings can be closed completely by the relative movement of the plate parts. Thus it is possible to close at least some of the passage openings if no throughflow is desired. This increases the adjustability of the throughflow and hence the application possibilities of the distribution plate.

The invention furthermore provides a distribution device for fluid substances, such as for example fertilizer, comprising: a distribution chamber which is provided with at least one supply and several outlets for fluid substances; an adjustable distribution plate according to the present invention as described above, adjoining the several outlets; a rotor situated in the distribution chamber and provided with at least one cutter blade which can be moved along the openings in the distribution plate, said cutter blade being configured for alternately covering the openings; a drive for driving the rotor by means of a drive shaft; and a gas supply connected to the side of the cutter blade facing towards the outlet. For the advantages of such a distribution device, reference is made to the advantages already described above with respect to the adjustable distribution plate according to the present invention; these are hereby included by reference with respect to the adjustable distribution device according to the present invention. A drive shaft means the shaft or part of the shaft which forms a direct connection between the rotor and the drive, wherein a first end of the drive shaft is connected to the rotor and a second end of the drive shaft is connected to the drive. The distribution plate is arranged on the inside of the distribution device against the outlets, and also serves as a counter-blade for the at least one cutter blade moved by the rotor, the holes of which preferably coincide with the outlets. In a double variant, the outlets are located on two end sides of the distribution chamber, and a distribution plate according to the invention is provided on both end sides of the distribution chamber. This greatly increases the number of outlets that can be connected to the distribution chamber. It is here possible that the rotor is provided with at least two cutter blades which are pressed against distribution plates arranged on the end sides of the distribution chamber. Also, the at least two cutter blades hereby guarantee that solid parts can be chopped in front of each of the passage openings in the distribution plates.

Also, the rotor of the distribution device may be provided with a plurality of cutter blades in order to simultaneously cover several outlets. If several passage openings in a distribution plate are covered simultaneously by the cutter blades, the pressure in the distribution chamber and at the other passage openings increases, which improves the throughflow and distribution of the fluid substances through the outlets and the pipes connected thereto. It is also possible to arrange the cutter blades rotationally symmetrically on the rotor, whereby the centre of gravity of the rotor coincides with the centre line of the drive shaft, and vibrations and resonances of the rotating drive shaft can be limited. The rotor may also be provided with at least two cutter blades which can be pressed against the distribution plates arranged on the end sides of the distribution chamber.

In yet another embodiment, the cutter blade of the distribution device is pressed against the distribution plate under pretension, for example by means of a compression spring. A compression spring offers a simple way of achieving the pretension under which the at least one cutter blade is pressed against the outlets. Also, such a compression spring can be placed behind the cutter blade, so that this forms part of the attachment of the cutter blade to the rotor.

For operation (movement) and positioning of the plate parts of the adjustable distribution plate, the distribution device may be fitted with a drive. Such operation can take place manually, for example by means of a handle, slide or rotary knob which can be operated from the outside, but it is also possible to mechanise this, for example by hydraulic, pneumatic or electric means. If the distribution device is also provided with at least one sensor coupled to the drive of the plate parts of the adjustable distribution plate, the operation of the adjustable distribution plate may also be fully automated and for example made dependent on variables perceived by the sensor, such as for example the pressure, flow speed and/or viscosity of the fluid substance to be distributed. It is also possible to make automatic operation position-dependent by coupling this to a position sensor (such as e.g. for a GPS signal). Thus for example the passage openings of the distribution plate may be closed when leaving a specific location, and/or the outflow may be adjusted depending on local circumstances (at micro level), i.e. by adapting the outflow openings in the distribution plate, it is possible to anticipate at very local level any differences which may be present on a single plot of land to be treated.

In yet another design of the distribution device, at least one cutter blade is provided with a hollow shank placed perpendicularly on the cutter blade, which hollow shank is received rotatably in a hollow tubular holder that is connected to the driveable rotor. The hollow shank received rotatably in the hollow tubular holder allows rotation of the cutter blade relative to the rotor, allowing variation in the part of the cutter blade which performs the cutting action, which benefits the durability of the cutter blade.

It is also possible to press the at least one cutter blade of the distribution device against the distribution plate under pretension. The pretension guarantees the contact of the cutter blade with the distribution plate, whereby the cutter blade can fully cover the outlets alternately, which further benefits the pressure build-up in the distribution chamber. Also, by being continuously in contact with the distribution plate, the cutter blade can move directly along the holes in the distribution plate, whereby the cutting action of the blades takes place on the basis of shearing. This allows the angle at which the cutter blade is ground to be increased without loss of effectiveness of the cutter blade, which further benefits the durability of the cutting edge of the cutter blade.

In a further design, parts of the outlets connected to the distribution chamber are located on at least two concentric circles around the centre line of the distribution chamber. Providing two rows of outlets one inside the other increases the number of outlets that can be connected to the distribution chamber. A large number of outlets allows an equally large number of pipes connected to the distribution openings to be attached to the outlets, which ensures a wide spread of fluid substance on the ground. Also, a larger number of outlets also increases the flow, and thereby the maximum capacity of the distribution device.

In yet another variant, the supply for fluid substance and the drive are located on the top or end sides of the distribution chamber. Because the gas supply and the drive shaft can be attached to one and the same side of the distribution chamber, by fixing the supply for fluid substance on the top side of the distribution chamber, more space is created for the supply of fluid substance. In this way, the supply for fluid substance can be widened, whereby the capacity of the distribution device is further enlarged. Also, widening the supply for fluid substance may be accompanied by a decrease in pumping resistance, which gives a fuel saving.

The invention also provides a fertilizer device for spreading fluid substances, such as for example fertilizer, over the ground, and provided with two spreader arms, wherein the spreader arms are each provided with a number of distribution openings, and wherein each of the spreader arms is provided with at least one distribution device according to the present invention, for distributing fluid substance via the distribution openings from a central fertilizer supply by means of pipes, wherein the size of the passage openings of the at least one distribution plate can be adjusted by the relative movement of the plate parts of the distribution plate. The distribution accuracy of the output (flow rate) of the fluid substance (fertilizer) to be distributed from such a fertilizer device is greater, because of the use of the distribution device according to the invention, than in existing fertilizer devices and is also easy to adjust without increasing the susceptibility to fault. This means that using the fertilizer device according to the present invention, fertilizer can be spread in a more precise fashion than according to the prior art. For the further advantages of the fertilizer device, reference is made to the advantages of the distribution plate and distribution device according to the invention as outlined above. Advantageously, the fertilizer device may be provided with a drive (manual, mechanical and/or automated) which is connected to at least one of the plate parts for relative movement of the plate parts. By means of such operation, the size of the holes in the at least one distribution plate of the at least one distribution device can be adjusted, as a result of which the fertilizer distribution (the flow rate of the fertilizer output) can be controlled. If such a drive of at least one of the plate parts is coupled to at least one sensor for automatic perception of physical variables and/or to a sensor for automatic location determination, the adjustment of the size of the openings in the distribution plate can be controlled using the perceived physical variables and/or the location of the fertilizer device. Thus it is possible to actuate the fertilizer output automatically in a very controlled fashion, depending for example on the fertilizer quality, the temperature of the ground, the fluid fertilizer and/or the air, the composition of the ground, the travel speed etc.

The invention furthermore provides a method for adjusting the output of a distribution device for fluid substances according to the present invention, wherein the size of the passage openings of the at least one distribution plate is adjusted by relative movement of the plate parts of the distribution plate. Using this method, the advantages can be achieved as already outlined above with respect to the distribution plate, the distribution device and the fertilizer device according to the present invention.

The present invention will be explained in more detail below with reference to the attached figures which show non-limitative exemplary embodiments. The drawings show:
figure 1 A: a top view of a distribution plate according to the present invention;
figure 1B: a cross-section through a part of the distribution plate from figure 1A at the level of a passage opening with adjustable size;
figure 2A: a top view of an alternative embodiment of a distribution plate according to the present invention in a first state;
figure 2B: a top view of the distribution plate from figure 2A in a second state;
figure 3: a perspective view of a distribution device according to the present invention;
figure 4: an exploded view of part of the distribution device from figure 3; and
figure 5: a diagrammatic, perspective view of a fertilizer device according to the present invention.

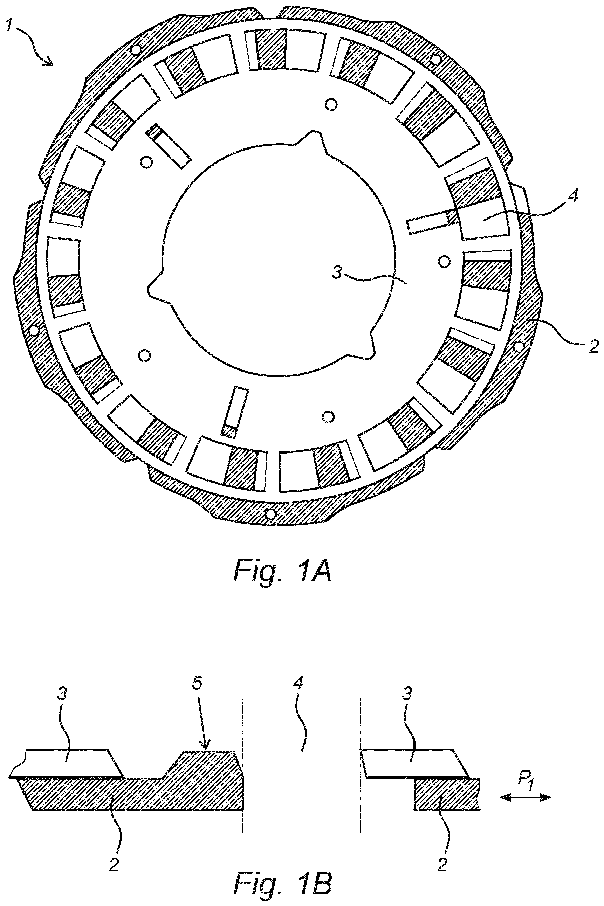

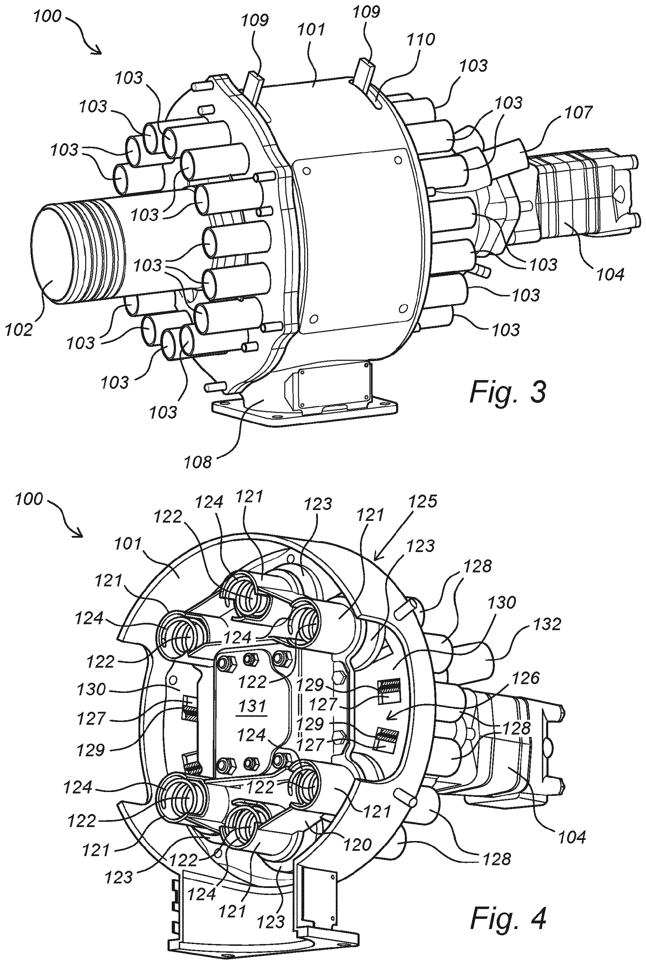

Figure 1 shows a top view of a distribution plate 1 which is composed of two separate plate parts 2 and 3. The plate parts together leave a concentric ring of passage openings 4, the size (scope) of which can be adjusted/controlled by the relative rotation of the plate parts 2, 3. For further explanation of the adjustability of the size of a passage opening 4, reference is made to figure 1B. This shows a cross-section through a part of the distribution plate 1 from figure 1A at the level of a passage opening 4. The plate part 3 can be moved in accordance with arrow P₁ relative to plate part 2, with the result that the effective scope of the passage opening 4 becomes smaller or larger. The two plate parts 3, 4 together define a flat supply side 5 over which a blade can scrape, as explained in more detail below with reference to figure 4.

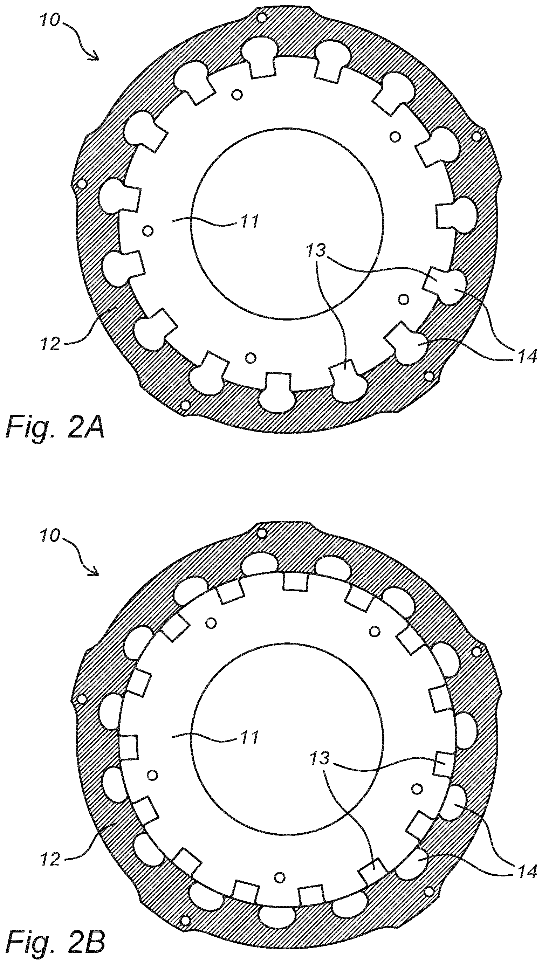

Figures 2A and 2B show an alternative embodiment of a distribution plate 10 with two plate parts 11, 12 which are rotatable relative to each other. In figure 2A, the part openings 13, 14 in the respective plate parts 11, 12 adjoin each other, and in figure 2B these part openings 13, 14 are moved apart such that they do not adjoin each other. As a result, by the relative movement, not only is the scope of the passage openings changed but also the number of passage openings is changed.

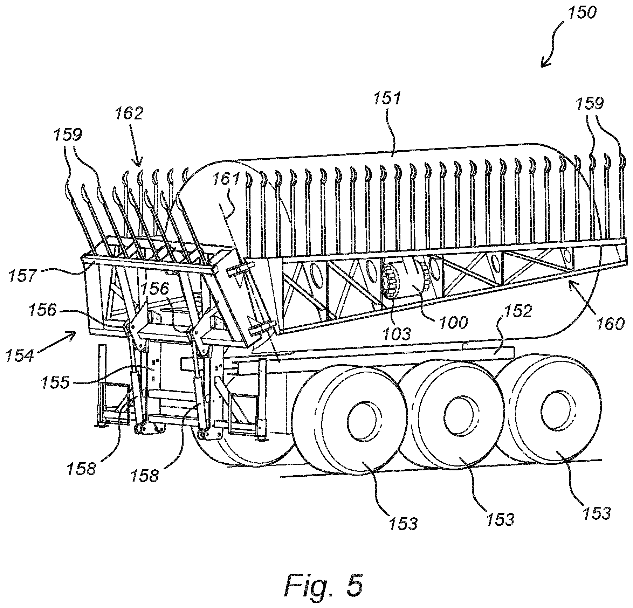

Figure 3 shows a perspective view of a distribution device 100 according to the present invention. The distribution device 100 comprises a cylindrical distribution chamber 101, on a first end side of which a supply 102 is connected for fluid substances such as for example fertilizer. This side also comprises several outlets 103 for the discharge of fluid substances via pipes (not shown) to be connected to the outlets 103. On a second end side of the distribution chamber 101, the distribution device 100 is provided with a drive 104 which is configured, by means of a drive shaft (not shown here), for driving a rotor 120 situated in the distribution chamber 101 (see figure 4). The second end side of the distribution chamber 101 is also provided with several outlets 103 and a gas inlet 107, which gas inlet 107 may be in contact with a gas supply (also not shown here). The distribution device 100 is furthermore provided with a foot 108 for fixing to an external structure such as a spreader arm (see figure 5). In addition, the foot 108 may serve as a settling reservoir for foreign parts such as stones and metal objects which may contaminate the fluid substance and cannot be chopped. These foreign parts may be periodically removed via an opening on the underside of the foot 108. Also, on the outside of the distribution chamber 101, two movable bars 109 are visible which are displaceable in slots 110 arranged in the housing 101. By displacement in the slots 110, the bars 109 can change the state of the adjustable cutting plates present in the distribution device, which are not shown here but for example correspond to the cutting plates shown in figures 1, 2A and 2B. In other words, by moving the bars 109, the size of the openings in the cutting plates of the distribution device 100 can be adjusted. The bars 109 shown here can be moved manually, but it is also possible to provide a drive, for example in the form of a pneumatic or hydraulic cylinder or an electric motor, in order to mechanise and in some cases automate the operation of the bars 109.

Figure 4 shows a cross-section through the distribution device 100 shown in figure 3. Inside the distribution chamber 101 is a rotor 120 which is driven by the drive 104, and on the outside of which are several hollow tubular holders 121. The holders 121 are each configured for rotatably receiving one or more conical cutter blades 123 which are connected to hollow shanks 122. Also, compression springs 124 are placed in the holders, for pressing the cutter blades 123 against a distribution plate 126 (also known as a cutting plate or perforated plate) arranged on a side wall 125 of the distribution chamber 101. The distribution plate 126 and side wall 125 of the distribution chamber 101 are provided with holes 127 which are arranged in a circle close to the circumference and to which outlets 128 are connected. The size (surface area) of the holes 127 can be adjusted because the size of the holes is determined by two plate parts 129, 130 which can be rotated relative to each other over a limited angular distance (only the segments of the plate part 129 shown as darker are visible, because in this figure the majority of the plate part 129 is hidden by the plate part 130). The mutual twist (rotation) of the plate parts 129, 130 allows the darker segments to be covered to a greater or lesser extent by the openings in the plate part 130. Thus the size of the holes 127 is fully adjustable.

The working of the distribution device 100 is as follows. Fluid substance enters the distribution chamber 101 via a supply (not shown here, but marked 102 in figure 3), after which it flows via a deflector element 131 of the rotor 120 from two sides in the direction of the outlets 128. The deflector element 131 may be configured as a removable plate in order to be able to eliminate any contamination or clogging (for example by rinsing with water). The cutter blades 123 chop any solid parts present in the fluid substance, and on rotation of the rotor 120 alternately cover the holes 127. On a side facing the side wall 125 of the distribution chamber 101, the cutter blades 123 are also provided with an opening for supplying the outlet 128 with air or another gas. This gas is supplied in the direction of the rotor 120 via a gas inlet 132, at least partly through the drive shaft, after which the gas flows in the direction of tubular holders 121 via a side of the deflector element 131 facing the drive shaft. Via holes arranged in the tubular holders 121, the gas passes along the coils of the compression spring 124 through the hollow shanks 122 of the cutter blades 123 to emerge below the cutter blades 123. By means of a foot 108, the distribution device 100 is mounted on an external structure of the fertilizer device. Also, the foot 108 may serve as a settling reservoir for foreign parts which cannot be chopped.

Figure 5 shows a diagrammatic view of a fertilizer device 150 (here in the form of a manure tanker) provided with a tank 151 and a substructure 152 with wheels 153. A metering device 154 is provided on the back of the substructure 152. The metering device 154 comprises a frame 155 which is attached to the substructure 152. The frame 155 is connected via horizontal frame rotation shafts 156 to a central metering arm segment 157. The central metering arm segment 157 is in the folded transport state in the figure. The central metering arm segment 157 may be folded down into a working position by means of cylinders 158. The central metering arm segment 157 is provided with fertilizer outlet elements 159 protruding obliquely upward. A second metering arm segment 160 (on the right in this figure) is pivotably connected to the central metering arm segment 157 and also carries protruding outlet elements 159, wherein the segment rotation axis (pivot axis between the central metering arm segment 157 and the second metering arm segment 160) is shown by a dotted line 161. A second metering arm segment 162 on the left is also pivotably attached to the central metering arm segment 157; in this figure description however, no further attention is paid to the second metering arm segment 162 on the left since it corresponds mirror-symmetrically to the second metering arm segment 160 on the right. The second metering arm segment 160 is provided with protruding outlet elements 159 that are connected by hoses (not shown in this figure for the sake of clarity) to the outlets 103 (in figure 3, and marked 128 in figure 4), and connected to a fertilizer distribution device 100 which is incorporated in the second metering arm segment 160. By adjusting the passage openings (127 in figure 4) of the distribution device 100, the output of fluid fertilizer from the outlet elements 159 can thus be influenced.

## Claims

1. Distribution plate (1, 10, 126) for use in a distribution device (100) for fluid substances, such as for example fertilizer, comprising a flat plate (1, 10, 126) provided with a flat supply side (5) in which several passage openings (4, 127) for fluid substances are provided, said flat plate (1, 10, 126) comprising at least two plate parts (2, 3; 11, 12; 129, 130) movable relative to each other,
wherein the size of at least some of the passage openings (4, 127) can be changed by the relative movement of the plate parts (2, 3; 11, 12; 129, 130),
**characterised in that** the flat supply side (5) of the distribution plate (1, 10, 126) is defined by the at least two plate parts (2, 3; 11, 12; 129, 130).

2. Distribution plate (1, 10, 126) according to claim 1, **characterized in that** top sides of a passage opening (4, 127) in the distribution plate (1, 10, 126) are formed by at least two plate parts (2, 3; 11, 12; 129, 130) movable relative to each other.

3. Distribution plate (1, 10, 126) according to claim 1 or 2, **characterized in that** the plate parts (2, 3; 11, 12; 129, 130) are rotatable relative to each other.

4. Distribution plate(1, 10, 126) according to any of the preceding claims, **characterized in that** the plate parts (2, 3; 11, 12; 129, 130) are translatable relative to each other.

5. Distribution plate (1, 10, 126) according to any of the preceding claims, **characterized in that** at least some of the sides of the passage openings (4, 127) are provided with a sharp edge, for example an edge with an angle of 80 - 100°.

6. Distribution plate (1, 10, 126) according to any of the preceding claims, **characterized in that** the passage openings (4, 127) are self-clearing towards to the flat supply side (5).

7. Distribution plate (1, 10, 126) according to any of the preceding claims, **characterized in that** the distribution plate (1, 10, 126) is substantially circular.

8. Distribution plate (1, 10, 126) according to claim 7, **characterized in that** the passage openings (4, 127) are arranged substantially coaxially in the distribution plate (1, 10, 126).

9. Distribution plate (1, 10, 126) according to any of the preceding claims, **characterized in that** the passage openings (4, 127) have mutually different sizes.

10. Distribution plate (1, 10, 126) according to any of the preceding claims, **characterized in that** at least some of the passage openings (4, 127) can be closed completely by the relative movement of the plate parts (2, 3; 11, 12; 129, 130).

11. Distribution device (100) for fluid substances, such as for example fertilizer, comprising:
- a distribution chamber (101) which is provided with at least one supply (102) and several outlets (103, 128) for fluid substances;
- an adjustable distribution plate (1, 10, 126) according to any of the preceding claims, adjoining the several outlets (103, 128);
- a rotor (120) situated in the distribution chamber (101) and provided with at least one cutter blade (123) which can be moved along the openings (4, 127) in the distribution plate (1, 10, 126), said cutter blade (123) being configured for alternately covering the openings (4, 127);
- a drive (104) for driving the rotor (120) by means of a drive shaft; and
- a gas supply (107, 132) connected to the side of the cutter blade (123) facing towards the outlet (103, 128).

12. Distribution device (100) according to claim 11, **characterized in that** the device (100) is provided with a drive for relative movement of the plate parts (2, 3; 11, 12; 129, 130) of the adjustable distribution plate (1, 10, 126).

13. Distribution device (100) according to claim 12, **characterized in that** the distribution device (100) is provided with at least one sensor coupled to the drive of the plate parts (2, 3; 11, 12; 129, 130) of the adjustable distribution plate (1, 10, 126).

14. Fertilizer device (150) for spreading fluid substances, such as for example fertilizer, over the ground, and provided with two spreader arms (160, 161), wherein the spreader arms (160, 161) are each provided with a number of distribution openings (159), and wherein each of the spreader arms (160, 161) is provided with at least one distribution device (100) according to any of claims 11 - 13 for distributing fluid substance via the distribution openings (159) from a central fertilizer supply (151) by means of pipes,
wherein the size of the passage openings (4, 127) of the at least one distribution plate (1, 10, 126) can be adjusted by the relative movement of the plate parts (2, 3; 11, 12; 129, 130) of the distribution plate (1, 10, 126).

15. Fertilizer device (100) according to claim 14, **characterized in that** the device (100) is provided with a drive which is connected to at least one of the plate parts (2, 3; 11, 12; 129, 130) for relative movement of the plate parts (2, 3; 11, 12; 129, 130).

16. Fertilizer device (100) according to claim 15, **characterized in that** the drive of at least one of the plate parts (2, 3; 11, 12; 129, 130) is coupled to at least one sensor for automatic perception of physical variables.

17. Fertilizer device (100) according to claim 15 or 16, **characterized in that** the drive of at least one of the plate parts (2, 3; 11, 12; 129, 130) is coupled to at least one sensor for automatic location determination.

18. Method for adjusting the output of a distribution device (100) for fluid substances according to any of claims 11 - 13, wherein the size of the passage openings (4, 127) of the at least one distribution plate (1, 10, 126) is adjusted by relative movement of the plate parts (2, 3; 11, 12; 129, 130) of the distribution plate (1, 10, 126).

## Patentansprüche

1. Verteilplatte (1, 10, 126) zur Verwendung in einer Verteileinrichtung (100) für flüssige Substanzen, wie z. B. Dünger, umfassend eine ebene Platte (1, 10, 126), die mit einer ebenen Versorgungsseite (5) versehen ist, in der mehrere Durchtrittsöffnungen (4, 127) für flüssige Substanzen vorgesehen sind, wobei die ebene Platte (1, 10, 126) mindestens zwei relativ zueinander bewegbare Plattenteile (2, 3; 11, 12; 129, 130) umfasst,
wobei die Größe mindestens einiger der Durchtrittsöffnungen (4, 127) durch die Relativbewegung der Plattenteile (2, 3; 11, 12; 129, 130) verändert werden kann, **dadurch gekennzeichnet, dass** die flache Versorgungsseite (5) der Verteilplatte (1, 10, 126) durch die mindestens zwei Plattenteile (2, 3; 11, 12; 129, 130) definiert ist.

2. Verteilplatte (1, 10, 126) gemäß Anspruch 1, **dadurch gekennzeichnet, dass** die Oberseiten einer Durchtrittsöffnung (4, 127) in der Verteilplatte (1, 10, 126) durch mindestens zwei relativ zueinander bewegbare Plattenteile (2, 3; 11, 12; 129, 130) gebildet sind.

3. Verteilplatte (1, 10, 126) gemäß Anspruch 1 oder 2, **dadurch gekennzeichnet, dass** die Plattenteile (2, 3; 11, 12; 129, 130) relativ zueinander drehbar sind.

4. Verteilplatte (1, 10, 126) gemäß einem der vorhergehenden Ansprüche, **dadurch gekennzeichnet, dass** die Plattenteile (2, 3; 11, 12; 129, 130) relativ zueinander verschiebbar sind.

5. Verteilplatte (1, 10, 26) gemäß einem der vorhergehenden Ansprüche, **dadurch gekennzeichnet, dass** mindestens einige der Seiten der Durchtrittsöffnungen (4, 127) mit einer scharfen Kante, beispielsweise einer Kante mit einem Winkel von 80 - 100°, versehen sind.

6. Verteilplatte (1, 10, 126) gemäß einem der vorhergehenden Ansprüche, **dadurch gekennzeichnet, dass** die Durchtrittsöffnungen (4, 127) zur flachen Versorgungsseite (5) hin selbstreinigend sind.

7. Verteilplatte (1, 10, 126) gemäß einem der vorhergehenden Ansprüche, **dadurch gekennzeichnet, dass** die Verteilplatte (1, 10, 126) im Wesentlichen kreisförmig ist.

8. Verteilplatte (1, 10, 126) gemäß Anspruch 7, **dadurch gekennzeichnet, dass** die Durchtrittsöffnungen (4, 127) im Wesentlichen koaxial in der Verteilplatte (1, 10, 126) angeordnet sind.

9. Verteilplatte (1, 10, 126) gemäß einem der vorhergehenden Ansprüche, **dadurch gekennzeichnet, dass** die Durchtrittsöffnungen (4, 127) zueinander unterschiedliche Größen aufweisen.

10. Verteilplatte (1, 10, 126) gemäß einem der vorhergehenden Ansprüche, **dadurch gekennzeichnet, dass** mindestens einige der Durchtrittsöffnungen (4, 127) durch die Relativbewegung der Plattenteile (2, 3; 11, 12; 129, 130) vollständig geschlossen werden können.

11. Verteileinrichtung (100) für flüssige Substanzen, wie z. B. Düngemittel, umfassend:
- eine Verteilkammer (101), die mit mindestens einem Zulauf (102) und mehreren Auslässen (103, 128) für flüssige Substanzen versehen ist;
- eine verstellbare Verteilplatte (1, 10, 126) gemäß einem der vorhergehenden Ansprüche, die an die einzelnen Auslässe (103, 128) anschließt;
- einen Rotor (120), der sich in der Verteilkammer (101) befindet und mit mindestens einem Schneidmesser (123) versehen ist, das entlang der Öffnungen (4, 127) in der Verteilplatte (1, 10, 126) bewegt werden kann, wobei das Schneidmesser (123) dazu ausgelegt ist, die Öffnungen (4, 127) abwechselnd abzudecken;
- einen Antrieb (104) zum Antreiben des Rotors (120) mittels einer Antriebswelle; und
- eine Gaszufuhr (107, 132), die mit der dem Auslass (103, 128) zugewandten Seite des Schneidmessers (123) verbunden ist.

12. Verteileinrichtung (100) gemäß Anspruch 11, **dadurch gekennzeichnet, dass** die Einrichtung (100) mit einem Antrieb zur Relativbewegung der Plattenteile (2, 3; 11, 12; 129, 130) der verstellbaren Verteilplatte (1, 10, 126) versehen ist.

13. Verteileinrichtung (100) gemäß Anspruch 12, **dadurch gekennzeichnet, dass** die Verteileinrichtung (100) mit mindestens einem Sensor versehen ist, der mit dem Antrieb der Plattenteile (2, 3; 11, 12; 129, 130) der verstellbaren Verteilplatte (1, 10, 126) gekoppelt ist.

14. Düngeeinrichtung (150) zum Verteilen von flüssigen Substanzen, wie z. B. Dünger, über den Boden, die mit zwei Streuerarmen (160, 161) versehen ist, wobei die Streuerarme (160, 161) jeweils mit einer Anzahl von Verteilöffnungen (159) versehen sind, und wobei jeder der Streuerarme (160, 161) mit mindestens einer Verteileinrichtung (100) gemäß einem der Ansprüche 11 - 13 zum Verteilen von flüssiger Substanz über die Verteilöffnungen (159) von einer zentralen Düngemittelversorgung (151) mittels Rohren versehen ist,
wobei die Größe der Durchtrittsöffnungen (4, 127) der mindestens einen Verteilplatte (1, 10, 126) durch die Relativbewegung der Plattenteile (2, 3; 11, 12; 129, 130) der Verteilplatte (1, 10, 126) eingestellt werden kann.

15. Düngeeinrichtung (100) gemäß Anspruch 14, **dadurch gekennzeichnet, dass** die Einrichtung (100) mit einem Antrieb versehen ist, der mit mindestens einem der Plattenteile (2, 3; 11, 12; 129, 130) zur Relativbewegung der Plattenteile (2, 3; 11, 12; 129, 130) verbunden ist.

16. Düngeeinrichtung (100) gemäß Anspruch 15, **dadurch gekennzeichnet, dass** der Antrieb mindestens eines der Plattenteile (2, 3; 11, 12; 129, 130) mit mindestens einem Sensor zur automatischen Erfassung physikalischer Größen gekoppelt ist.

17. Düngeeinrichtung (100) gemäß Anspruch 15 oder 16, **dadurch gekennzeichnet, dass** der Antrieb mindestens eines der Plattenteile (2, 3; 11, 12; 129, 130) mit mindestens einem Sensor zur automatischen Standortbestimmung gekoppelt ist.

18. Verfahren zum Einstellen des Durchsatzes einer Verteileinrichtung (100) für flüssige Substanzen gemäß einem der Ansprüche 11 - 13, wobei die Größe der Durchtrittsöffnungen (4, 127) der mindestens einen Verteilplatte (1, 10, 126) durch Relativbewegung der Plattenteile (2, 3; 11, 12; 129, 130) der Verteilplatte (1, 10, 126) eingestellt wird.

## Revendications

1. Plaque de distribution (1, 10, 126) destinée à être utilisée dans un dispositif de distribution (100) pour des substances fluides, comme par exemple un engrais, comprenant une plaque plane (1, 10, 126) munie d'un côté d'alimentation plat (5) où sont ménagées plusieurs ouvertures de passage (4, 127) pour les substances fluides, ladite plaque plane (1, 10, 126) comprenant au moins deux parties de plaque (2, 3 ; 11, 12 ; 129, 130) mobiles l'une par rapport à l'autre,
la taille d'au moins certaines des ouvertures de passage (4, 127) pouvant être modifiée par le déplacement relatif des parties de plaque (2, 3 ; 11, 12 ; 129, 130), **caractérisée en ce que** le côté d'alimentation plat (5) de la plaque de distribution (1, 10, 126) est défini par les au moins deux parties de plaque (2, 3 ; 11, 12 ; 129, 130).

2. Plaque de distribution (1, 10, 126) selon la revendication 1, **caractérisée en ce que** des côtés supérieurs d'une ouverture de passage (4, 127) dans la plaque de distribution (1, 10, 126) sont formés par au moins deux parties de plaque (2, 3 ; 11, 12 ; 129, 130) mobiles l'une par rapport à l'autre.

3. Plaque de distribution (1, 10, 126) selon la revendication 1 ou 2, **caractérisée en ce que** les parties de plaque (2, 3 ; 11, 12 ; 129, 130) sont rotatives les unes par rapport aux autres.

4. Plaque de distribution (1, 10, 126) selon l'une quelconque des revendications précédentes, **caractérisée en ce que** les parties de plaque (2, 3 ; 11, 12 ; 129, 130) peuvent être déplacées en translation les unes par rapport aux autres.

5. Plaque de distribution (1, 10, 126) selon l'une quelconque des revendications précédentes, **caractérisée en ce qu'**au moins certains des côtés des ouvertures de passage (4, 127) sont munis d'une arête vive, par exemple d'une arête avec un angle de 80 à 100°.

6. Plaque de distribution (1, 10, 126) selon l'une quelconque des revendications précédentes, **caractérisée en ce que** les ouvertures de passage (4, 127) sont autonettoyantes vers le côté d'alimentation plat (5).

7. Plaque de distribution (1, 10, 126) selon l'une quelconque des revendications précédentes, **caractérisée en ce que** la plaque de distribution (1, 10, 126) est sensiblement circulaire.

8. Plaque de distribution (1, 10, 126) selon la revendication 7, **caractérisée en ce que** les ouvertures de passage (4, 127) sont agencées sensiblement coaxialement dans la plaque de distribution (1, 10, 126).

9. Plaque de distribution (1, 10, 126) selon l'une quelconque des revendications précédentes, **caractérisée en ce que** les ouvertures de passage (4, 127) ont mutuellement différentes tailles.

10. Plaque de distribution (1, 10, 126) selon l'une quelconque des revendications précédentes, **caractérisée en ce qu'**au moins certaines des ouvertures de passage (4, 127) peuvent être fermées complètement par le déplacement relatif des parties de plaque (2, 3 ; 11, 12 ; 129, 130).

11. Dispositif de distribution (100) pour des substances fluides, comme par exemple un engrais, comprenant :
- une chambre de distribution (101) qui est munie d'au moins une alimentation (102) et de plusieurs sorties (103, 128) pour des substances fluides ;
- une plaque de distribution réglable (1, 10, 126) selon l'une quelconque des revendications précédentes, attenante aux plusieurs sorties (103, 128) ;
- un rotor (120) situé dans la chambre de distribution (101) et muni d'au moins une lame de coupe (123) qui peut être déplacée le long des ouvertures (4, 127) dans la plaque de distribution (1, 10, 126), ladite lame de coupe (123) étant configurée pour recouvrir en alternance les ouvertures (4, 127) ;
- un entraînement (104) pour entraîner le rotor (120) au moyen d'un arbre d'entraînement ; et
- une alimentation en gaz (107, 132) raccordée au côté de la lame de coupe (123) en regard de la sortie (103, 128).

12. Dispositif de distribution (100) selon la revendication 11, le dispositif (100) étant **caractérisé en ce qu'**il est muni d'un entraînement en vue d'un déplacement relatif des parties de plaque (2, 3 ; 11, 12 ; 129, 130) de la plaque de distribution réglable (1, 10, 126).

13. Dispositif de distribution (100) selon la revendication 12, le dispositif de distribution (100) étant **caractérisé en ce qu'**il est muni d'au moins un capteur accouplé à l'entraînement des parties de plaque (2, 3 ; 11, 12 ; 129, 130) de la plaque de distribution réglable (1, 10, 126).

14. Dispositif fertiliseur (150) pour épandre des substances fluides, comme par exemple un engrais, sur le sol et muni d'au moins deux bras épandeurs (160, 161), les bras épandeurs (160, 161) étant chacun munis d'un certain nombre d'ouvertures de distribution (159) et chacun des bras épandeurs (160, 161) étant muni d'au moins un dispositif de distribution (100) selon l'une quelconque des revendications 11 à 13 pour distribuer une substance fluide par l'intermédiaire des ouvertures de distribution (159) à partir d'une alimentation centrale en engrais (151) au moyen de tuyaux,
la taille des ouvertures de passage (4, 127) de l'au moins une plaque de distribution (1, 10, 126) pouvant être réglée par le déplacement relatif des parties de plaque (2, 3 ; 11, 12 ; 129, 130) de la plaque de distribution (1, 10, 126).

15. Dispositif fertiliseur (100) selon la revendication 14, le dispositif (100) étant **caractérisé en ce qu'**il est muni d'un entraînement qui est raccordé à au moins une des parties de plaque (2, 3 ; 11, 12 ; 129, 130) en vue d'un déplacement relatif des parties de plaque (2, 3 ; 11, 12 ; 129, 130).

16. Dispositif fertiliseur (100) selon la revendication 15, **caractérisé en ce que** l'entraînement d'au moins une des parties de plaque (2, 3 ; 11, 12 ; 129, 130) est accouplé à au moins un capteur en vue de la perception automatique de variables physiques.

17. Dispositif fertiliseur (100) selon la revendication 15 ou 16, **caractérisé en ce que** l'entraînement d'au moins une des parties de plaque (2, 3 ; 11, 12 ; 129, 130) est accouplé à au moins un capteur en vue de la détermination automatique d'emplacements.

18. Procédé de réglage du débit d'un dispositif de distribution (100) pour des substances fluides selon l'une quelconque des revendications 11 à 13, dans lequel la taille des ouvertures de passage (4, 127) de l'au moins une plaque de distribution (1, 10, 126) est réglée par un déplacement relatif des parties de plaque (2, 3 ; 11, 12 ; 129, 130) de la plaque de distribution (1, 10, 126).
